# FASCICULE DE BREVET EUROPEEN

(11) **EP 3 210 477 B1**
(45) Date de publication et mention de la délivrance du brevet: **02.12.2020**
(21) Numéro de dépôt: 17157651.5
(22) Date de dépôt: 23.02.2017
(51) Int. Cl.: A23L 3/36, B65B 25/00, B65B 55/18, A23L 3/015, A23L 3/3409, A23B 4/26, A23B 4/28

(54) **PROCÉDÉ ET SYSTÈME DE DÉGAZAGE DE PRODUITS ALIMENTAIRES AVEC RE-INJECTION DE FLUIDES**
VERFAHREN UND VORRICHTUNG ZUR ENTGASUNG VON NAHRUNGSMITTEL MIT WIEDEREINSPRITZEN VON FLUIDEN
PROCESS AND SYSTEM FOR DEGASSING OF FOOD PRODUCTS WITH RE-INJECTING FLUIDS

(30) Priorité: 25.02.2016 FR 1651544
(43) Date de publication de la demande: 30.08.2017
(73) Titulaire: Sodetech, 33260 La Teste de Buch (FR)
(72) Inventeur: LARROCHE, Jean, 33260 LA TESTE DE BUCH (FR); LARROCHE, Brigitte, 75020 PARIS (FR)
(74) Mandataire: Ipside

(56) Documents cités:
- WO-A1-85/01420
- WO-A1-2012/000903
- FR-A1- 2 197 531
- FR-A1- 2 396 516
- US-A- 3 476 078

## Description

### Domaine de l'invention

La présente invention se rapporte au domaine de l'agroalimentaire, et plus particulièrement à un procédé et à un système de dégazage de produits alimentaires, avec réinjection de fluides.

La présente invention concerne plus particulièrement des techniques de préparation et de mise en réserve d'aliments bruts destinés à un traitement et un conditionnement en conserve et représente une possibilité d'équipement complet pour dégazer, imprégner de gaz ou de liquide, refroidir et débactériser des aliments bruts ou transformés.

Les objets de l'invention sont définis dans les revendications.

### Etat de la technique

Les techniques de dégazage continu des aliments n'ont pas été approfondies, du fait que les techniques d'emballage n'ont, jusqu'ici, pas permis de maintenir un vide profond durable, rendant inutile l'effort du dégazage initial. Or, pour obtenir un vide profond durable dans des conteneurs, il convient de saisir toutes les occasions pour éliminer les gaz incondensables dans les circuits des machines tout au long des traitements et en particulier dans les tissus des aliments traités.

L'invention présentée ici concerne les techniques de préparation et de mise en réserve d'aliments bruts, quelle que soit leur nature animale ou végétale, destinés à un traitement et un conditionnement en conserve ultérieur, et dans lesquels on voudrait supprimer durablement l'oxygène, assez pour qu'on puisse se passer des additifs classiques ou autres techniques anti-rancissement dans l'industrie alimentaire, tels que l'acide ascorbique, ce dernier n'étant qu'un exemple parmi d'autres.

L'invention concerne un procédé et un système qui représentent une possibilité d'équipement complet pour appliquer le procédé de dégazage initial et d'imprégnation décrit dans le brevet français N° FR 2 829 106 B1, ou encore permettant le dégazage initial des aliments tel qu'il est préconisé dans le brevet européen N° EP 2 357 136 B1, présentés par les mêmes inventeurs, ou encore permettant la désoxygénation durable, la débactérisation et le refroidissement ou la surgélation immédiate d'aliments pour une mise en réserve dans l'attente d'un traitement différé sans risque de dégât par oxydation.

FR2396516 a trait à un appareil pour traiter en continu par le vide, différents produits alimentaires, notamment des champignons.

L'ensemble des opérations induit une première élimination efficace des microorganismes non sporulés, ce qui limite l'inoculum qu'on retrouvera dans les produits au moment de leur mise en conserve.

Cette mise en réserve peut se faire par réfrigération temporaire sous gaz neutre et peut aller jusqu'à la surgélation.

### Exposé de l'invention

La présente invention permet un procédé continu et successif de dégazage, de débactérisation et de réfrigération ou de surgélation de produits alimentaires en morceaux et qui est particulièrement utile pour préparer à l'avance le conditionnement industriel des produits alimentaires, qu'il s'agisse de surgelés, de produits réfrigérés ou de conserves, qu'elles soient classiques ou sous vide profond, du fait que le dégazage supprime le risque de dégradation des matières grasses, des arômes et des colorants naturels dont est responsable l'oxygène, évitant ainsi de recourir à des additifs comme l'acide ascorbique.

L'invention est particulièrement utile pour la préparation d'aliments à conditionner sous vide profond, dans le sens qu'il permet d'augmenter encore le niveau de vide dans le conteneur final, en évitant la résurgence de gaz inclus dans les tissus des morceaux d'aliments ou dans les appareils, sauces ou jus traités.

L'invention est particulièrement utile pour mettre des aliments frais en réserve, dans l'attente des traitements de fabrication qui peuvent s'étaler sur toute l'année, par exemple, en plats cuisinés.

L'invention proposée permet un processus continu, ce qui la rend compatible avec la réalité des débits de produits sur les lignes industrielles.

Dans la suite de ce document, on entend par « produit » ou « produits » des aliments en général.

La présente invention concerne, dans son acception la plus générale, un procédé permettant la désoxygénation, la débactérisation et le refroidissement ou la surgélation de produits alimentaires, comportant les étapes suivantes :
- Dégazage desdits produits alimentaires ; et
- Réinjection de fluides ;
ledit procédé étant tel que défini dans les revendications.

Ladite étape de dégazage comporte les sous-étapes suivantes :
- Une sous-étape au cours de laquelle le dégazeur reçoit le produit par un sas d'entrée anti-retour équipé d'un mécanisme de dosage, lequel sas est situé à une extrémité du tube formé par ledit dégazeur ;
- Une sous-étape au cours de laquelle le produit progresse dans ledit dégazeur grâce à une vis sans fin dont les disques sont perforés plus finement que les morceaux d'aliments accueillis,
- Une sous-étape au cours de laquelle ledit dégazeur libère le produit par un sas de sortie anti-retour équipé d'un mécanisme de dosage étanche,
ledit dégazeur étant équipé d'une pompe à vide réglable assez puissante pour que l'on puisse maintenir une enceinte à une pression absolue inférieure à 30mbar et pouvant atteindre si possible 10mbar avec pour conséquence que, lorsque le produit alimentaire entre à température ambiante, une ébullition se produit au sein du produit qui en facilite le dégazage, ce qui permet de libérer les cavités éventuellement présentes dans les aliments de toute trace de gaz incondensable, en particulier de l'oxygène, et ce qui permet également de faire exploser les cellules non sporulées des microorganismes présents dans le dégazeur, et ce qui permet enfin de provoquer un premier refroidissement desdits aliments par suite d'une très légère évaporation d'une partie de l'eau liquide présente dans les aliments.

Ladite étape de réinjection comporte les sous-étapes suivantes :
- Une sous-étape au cours de laquelle le réinjecteur reçoit le produit par le sas de sortie du dégazeur situé à une extrémité du tube formé par ledit réinjecteur, lequel sas de sortie est raccordé au réinjecteur ;
- Une sous-étape au cours de laquelle le réinjecteur reçoit un fluide d'imprégnation par un mécanisme de valves, de becs injecteurs et de contrôle, ledit fluide d'imprégnation permettant de combler efficacement les vides interstitiels et les cavités dans les aliments ;
la distance entre le sas de sortie du dégazeur et le point de chute du produit dans le réinjecteur étant aussi courte que possible de manière à ce que l'immersion du produit dans le fluide d'imprégnation se produise aussi vite que possible et que le fluide d'imprégnation puisse combler efficacement les vides interstitiels et les cavités dans les aliments, sans que des gaz incondensables ne puissent entrer dans lesdits interstices ou cavités ;
ladite étape de réinjection comportant ensuite la sous-étape suivante :
- Une sous-étape au cours de laquelle le produit progresse dans le réinjecteur grâce à une vis sans fin dont les disques sont perforés plus finement que les morceaux d'aliments accueillis ;
la pression régnant dans le réinjecteur restant égale ou légèrement supérieure à la pression atmosphérique ;
ladite étape de réinjection comportant ensuite la sous-étape suivante :
Une sous-étape au cours de laquelle le réinjecteur libère le produit par un exutoire situé à l'autre bout du réinjecteur, exutoire par lequel les produits sortent par gravité et débouchent sur une zone protégée, par exemple par une jupe plastique, de telle sorte que lesdits produits puissent tomber dans le conteneur de destination sans se trouver à aucun moment au contact de l'air.

La présente invention se rapporte également à un système pour la mise en œuvre du procédé évoqué ci-dessus, tel que défini dans les revendications.

Avantageusement, ledit dégazeur est équipé d'un mécanisme de contrôle du niveau du produit alimentaire le long d'une vis sans fin, permettant de réguler le flux d'entrée des produits dans ledit dégazeur.

Selon un mode de réalisation, non conforme à l'invention, ladite source de fluide d'imprégnation est un conteneur sous pression dans lequel se trouve un gaz neutre autorisé en industrie alimentaire (nitrogène) dont le point d'ébullition est assez froid et dont la pression est assez élevée pour que, lors de la mise en contact de la source avec le réinjecteur, le gaz neutre se vaporise immédiatement en entrant dans le réinjecteur et pénètre profondément dans les interstices et cavités des morceaux d'aliments par suite de la rupture brutale du vide en sortie du dégazeur, évitant ainsi que, par la suite, n'intervienne une réoxygénation à l'intérieur des produits à l'occasion d'un contact temporaire avec de l'air, tout en favorisant également le refroidissement homogène et rapide jusqu'au cœur desdits morceaux d'aliments pour atteindre des températures de conservation froides positives ou négatives (surgélation). Dans ce mode de réalisation, l'exutoire des produits est constitué par un sas à alvéoles qui permet de maintenir le réinjecteur sous pression de gaz neutre.

De préférence, ledit réinjecteur comporte un système de contrôle incluant un thermostat couplé à un mécanisme de régulation du débit d'injection de gaz neutre qui permet de garantir la sortie des produits à une température d'objectif constante qui peut atteindre la température de surgélation.

Selon un autre mode de réalisation, ladite source de fluide d'imprégnation est un conteneur dans lequel se trouve un liquide de type assaisonnement à base d'huile ou d'eau qui a été au préalable dégazé par ailleurs, situé en hauteur afin que l'écoulement du liquide se fasse naturellement par gravité, ou mis sous légère pression pour que, lors de la mise en contact de la source avec le réinjecteur, ledit liquide s'écoule dans le réinjecteur pour former un bain dans lequel les aliments puissent tremper et s'imprégner aisément dudit liquide, lequel peut ainsi pénétrer profondément dans les interstices et cavités des morceaux d'aliments par suite de la rupture brutale du vide en sortie du dégazeur, évitant ainsi que, par la suite, n'intervienne une réoxygénation à l'intérieur des produits à l'occasion d'un contact temporaire avec de l'air, et en ce qu'il comporte des moyens pour incliner l'enceinte de telle sorte que l'exutoire se situe au dessus du niveau de liquide d'imprégnation afin d'éviter son échappement du réinjecteur, et en ce qu'il comporte en outre un sous-système de contrôle permanent et de régulation du débit d'injection dudit liquide permettant de garantir son renouvellement et le maintien du niveau de liquide d'imprégnation dans le réinjecteur à un niveau constant. Selon le mode de réalisation avec liquide de type assaisonnement, le réinjecteur est également équipé de moyens d'injection de vapeur saturée à proximité de l'entrée des produits en sortie du tube dégazeur, afin d'éviter que les aliments ne se réimprègnent de gaz incondensables avant d'atteindre le liquide ; dans ce cas l'apport en chaleur dans le réinjecteur est compensé par le refroidissement induit par l'entrée des produits eux-mêmes dont le dégazage a induit un refroidissement. Dans ce mode de réalisation, l'exutoire des produits est constitué par une simple trémie au niveau de laquelle ils sont protégés de tout contact avec l'air grâce à l'atmosphère de vapeur saturée qui s'échappe du réinjecteur, du fait qu'on maintient le réinjecteur à une pression égale ou légèrement supérieure à la pression atmosphérique.

### Brève description des dessins

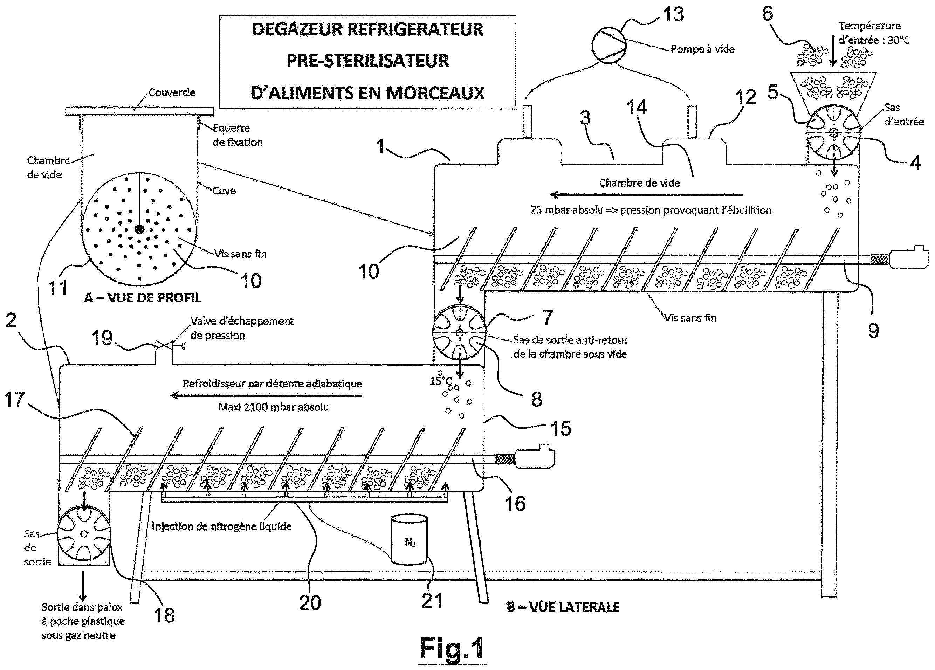

On comprendra mieux l'invention à l'aide de la description, faite ci-après à titre purement explicatif, d'un mode de réalisation de l'invention, en référence aux Figures dans lesquelles :
- En Figure 1 est représenté un système de dégazage réfrigérateur pré-stérilisateur d'aliments en morceaux ;
- La Figure 2 illustre le système de dégazage imprégnateur d'aliments en morceaux, selon la présente invention ; et
- La Figure 3 représente un système de dégazage pré-stérilisateur d'aliments pâteux avec ou sans morceaux.

### Description détaillée de modes de réalisation de l'invention

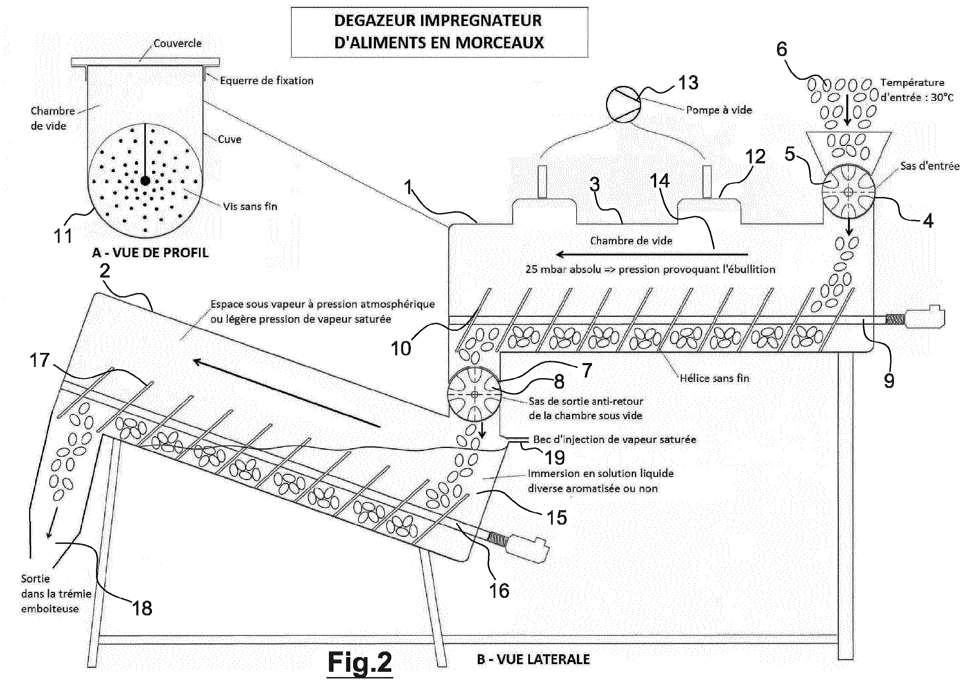

Dans une première configuration CONF 1 à deux dispositifs successifs (dégazage, imprégnation), illustrée en FIG 1 et FIG 2, l'invention proposée permet des opérations de dégazage et de débactérisation qui interviennent après que des aliments bruts aient été rassemblés, découpés, lavés et éventuellement traités pour neutraliser l'activité enzymatique dans les aliments, puis refroidis, mais avant imprégnation et mise en conserve et stérilisation ou pasteurisation.

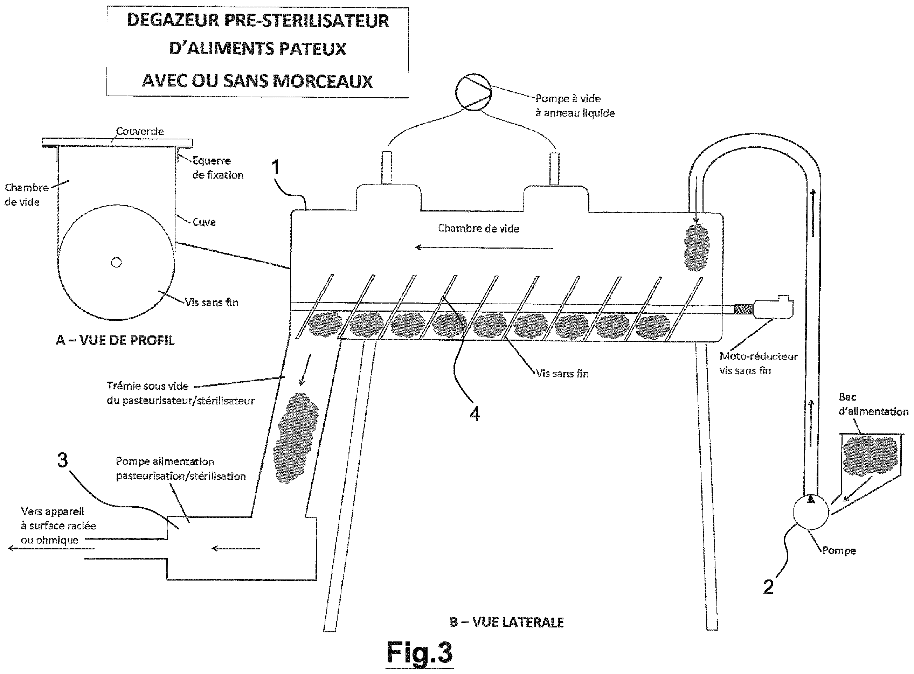

Dans une autre configuration particulière illustrée en FIG 3, non conforme à l'invention, il est proposé simplement de dégazer et débactériser des aliments déjà transformés de type pâteux, avec ou sans morceaux, mais sans les imprégner, tout ceci avant que les produits ne soient stérilisés ou pasteurisés en tube à surface raclée ou en tube ohmique.

Avant le dégazage par pompe à vide, on porte les aliments à une température adéquate, de manière à ce que se produise en leur sein une ébullition permanente et légère à basse température, ce qui facilite la circulation des gaz incondensables dans le produit, et permet un dégazage très efficace avec évacuation continue desdits gaz par la pompe à vide.

Cette ébullition par mise sous vide brutal provoque une explosion des cytoplasmes des cellules microbiennes adultes. Seules les spores déshydratées ne sont pas affectées.

Dans une première variante de la configuration CONF 1 illustrée en FIG 1, et qui est propre à la mise sous gaz neutre, ce dégazage peut être suivi d'une réinjection de gaz neutre, tel que le diazote (nitrogène) ou le dioxyde de carbone. A l'occasion de la réinjection de gaz neutre qui se fait sous forme liquide, un refroidissement est imposé aux aliments dégazés, par suite de la vaporisation du gaz neutre projeté dans l'enceinte où sont confinés les aliments.

Dans une autre variante de la configuration CONF 1, illustrée en FIG 2, le dégazage peut être suivi d'un barbotage dans une solution liquide destinée à imprégner les aliments pour remplacer les éventuelles cavités internes des morceaux de produits, ce qui, dans une application particulière, permettrait éventuellement de les recharger en huiles ou autres assaisonnements particuliers.

Dans l'application particulière avec injection de gaz nitrogène décrite dans le schéma FIG 1, ledit dispositif comprend deux enceintes successives 1 et 2, la première étant un dégazeur par pompe à vide, la seconde étant une enceinte de réinjection de gaz neutre, ces enceintes étant séparées de l'extérieur par des sas anti-retours qui permettent successivement l'introduction des aliments, leur passage de la première enceinte à la seconde et leur déversement dans un pallock (exemple marque palox), conteneur rigide de taille importante (ex. 2,4 m³), garni d'une poche plastique hermétique aux gaz et munie d'un dispositif de fermeture de type éclair ou zip que l'on peut ouvrir et refermer pour maintenir les produits dans une atmosphère confinée saturée de gaz neutre.

Ledit dégazeur comprend un tube de transfert 3 allongé, dont la base (cf. vue de profil A) est rigoureusement demi-cylindrique, possédant un sas d'entrée 4 étanche équipé d'un dispositif à alvéoles 5 permettant de faire entrer des quantités fixes de produit 6, et d'un sas de sortie étanche 7 anti-retour, également équipé d'un dispositif à alvéoles 8 permettant de faire sortir des quantités fixes de produit après leur dégazage, sans porter préjudice aux morceaux.

A l'intérieur dudit tube 3, un arbre rotatif motorisé 9 est monté dans la direction axiale soutenant une vis sans fin 10 dont les extrémités latérales sont ajustées de manière à atteindre quasiment la surface intérieure de la base du tube 11 qui forme un demi cylindre, et à faire avancer le produit lorsque la vis est en action. La spirale que forme la vis sans fin doit être de préférence perforée de trous d'une dimension inférieure à tous les morceaux de produits qu'on entend traiter (cf petits pois extrafins...), de manière à éviter que les liquides éventuellement ajoutés ne soient chassés vers le sas de sortie.

Vers le milieu du tube, la paroi du tube supporte deux dômes ou plus 12, lesquels sont raccordés à une pompe à vide puissante 13 (cf. type anneau liquide 60 m³/heure) capable d'extraire les gaz incondensables qui se présentent.

En cours d'utilisation, le tube est positionné horizontalement et rempli en partie seulement, de manière à déterminer une chambre de vide 14 dans la partie supérieure du tube 1, le long de laquelle les gaz peuvent circuler et rejoindre les dômes 12 où la pompe à vide extrait lesdits gaz en permanence et en tant que de besoin pour conserver dans l'enceinte du tube un vide profond (exemple 24 mbar de pression absolue, pour une température du produit de 30°C), pression donc assez basse pour provoquer une ébullition à basse température de l'eau contenue dans le produit et favoriser le dégazage interne des morceaux de produit.

La température à laquelle est introduite le produit dans ledit dégazeur peut être modulée en tant que de besoin pour ajouter un effet d'inactivation des enzymes de certains aliments, en particulier dans le cas des végétaux crus.

En imposant par exemple au produit une phase de chauffage à une température de 60°C en amont du dégazeur, et, mieux encore, en la couplant à une mise sous haute pression, on peut obtenir une inactivation accélérée des enzymes végétales. Dans une variante, on peut aussi décider d'introduire le produit encore chaud (exemple 60°C) dans le dégazeur, ce qui rendra plus violent le dégazage induit par la mise sous vide profond, cette violence pouvant être modulée par refroidissement intermédiaire entre le traitement d'inactivation des enzymes et l'entrée dans le dégazeur, l'objectif étant de choisir les paramètres adéquats pour obtenir les effets voulus sans endommager les produits.

L'ébullition du produit dans le dégazeur s'accompagne d'un refroidissement desdits aliments par suite de l'évaporation d'une partie de l'eau liquide présente dans les aliments, dont on sait qu'elle nécessite environ 542 Kcal/gramme d'eau évaporée. A titre d'illustration un produit entré à 25-30°C dans le tube doit pouvoir atteindre 15°C à la sortie du dégazeur.

Ladite seconde enceinte 2 comprend un tube de transfert 15 allongé, dont la base (cf. vue de profil A) est rigoureusement demi-cylindrique, et dont l'entrée se fait par le sas de sortie 7 de la première enceinte 1.

A l'intérieur dudit tube 15, un arbre rotatif motorisé 16 est monté dans la direction axiale soutenant une vis sans fin 17 dont les extrémités latérales sont ajustées de manière à atteindre quasiment la surface intérieure de la base du tube 15 qui forme un demi cylindre, et à faire avancer le produit lorsque la vis est en action. La spirale qui forme la vis sans fin doit être de préférence perforée de trous d'une dimension inférieure à tous les morceaux de produits qu'on entend traiter (cf petits pois extrafins...) de manière à éviter que les liquides éventuellement ajoutés ne soient chassés vers le sas de sortie 18.

Cette enceinte 2 est dénommée ici réinjecteur par commodité de langage.

### 1^{ère} variante du système de dispositifs dans la configuration CONF 1, illustrée en FIG 1 (non conforme à l'invention)

En aval du dégazeur, une première variante du réinjecteur permet de mettre les produits sous gaz neutre. Dans cette variante, vers le milieu du tube, la paroi du tube doit supporter une valve d'échappement de pression 19.

Dans la partie inférieure de l'enceinte 2, dont la pression est maintenue un peu au dessus de la pression atmosphérique, par exemple à 1100mbar, de manière à maintenir ladite enceinte 2 en légère surpression par rapport à l'atmosphère et en grande surpression par rapport à l'enceinte 1, une série de becs 20 permet d'injecter le gaz neutre qui, en passant entre les morceaux d'aliments et sous l'effet de la rupture du vide de la première enceinte 1, vient occuper les éventuelles cavités laissées vide dans les aliments par le dégazeur (enceinte 1).

Ledit gaz neutre provient d'une source 21 sous pression beaucoup plus importante que celle dans l'enceinte 2. L'injection de gaz neutre s'accompagne donc alors d'une détente adiabatique qui entraine un refroidissement important des aliments traversés.

En cours d'utilisation, le tube est positionné de manière horizontale ou légèrement inclinée de manière à ce que les produits puissent progresser sans encombre.

Dans le cas de cette 1^{ère} variante, le sas de sortie du réinjecteur 18 est un sas étanche équipé d'un mécanisme de dosage, comme les autres sas du système de dispositifs.

Les pressions, température et flux d'injection de l'azote sont à régler en fonction des flux de circulation des aliments, de la température ambiante, de la température des aliments introduits et de la température finale désirée.

Dans une application particulière, en réglant flux et débits de manière appropriée, on peut obtenir un produit surgelé sous azote, ce qui soustrait complètement le produit surgelé à toute forme d'oxydation et permet de se passer des additifs classiques comme l'acide ascorbique.

### 2^{ème} variante du système de dispositifs dans la configuration CONF 1, illustrée en FIG 2

Dans une seconde variante du réinjecteur, le dégazage peut être suivi d'un barbotage dans une solution liquide d'imprégnation destinée à remplacer les éventuelles cavités internes des morceaux de produits, barbotage qui aurait lieu dans l'enceinte 2.

Il conviendrait alors d'organiser l'injection de ladite solution de telle sorte que non seulement le niveau de liquide atteigne en permanence une hauteur suffisante dans le tube 15 pour que tout le produit puisse être imprégné de liquide, mais aussi que la chute des produits de l'enceinte 1 dans le bain de liquide d'imprégnation de l'enceinte 2 soit la plus courte possible pour que les cavités du produit s'emplissent en priorité du liquide d'imprégnation et non d'autre chose.

Dans cette seconde variante du système de dispositifs :
- le réinjecteur doit pouvoir être orienté avec une légère pente destinée à obliger ledit liquide de réimprégnation de rester dans l'enceinte 2 et à ne pas s'écouler par le sas de sortie 18 qui, dans le cas de cette seconde variante, n'a pas besoin d'être un sas à alvéoles et peut être un simple exutoire ;
- la source de gaz neutre 21 est inutile et doit être remplacée par une source de liquide d'imprégnation à positionner au dessus du niveau du liquide désiré dans le réinjecteur pour permettre son écoulement ;
- le réinjecteur doit être équipé d'un mécanisme de dosage et de mesure du niveau de liquide d'imprégnation ;
- le réinjecteur doit pouvoir être orienté avec une légère pente destinée à empêcher que ledit liquide de réimprégnation ne s'échappe de l'enceinte ;
- l'atmosphère de l'enceinte 2 est sous pression atmosphérique ou sous légère pression et l'on injecte par le bec 19 une atmosphère de vapeur saturée afin de soustraire les produits au risque de réintégration de gaz incondensables pendant le temps qu'ils chutent dans le liquide.

### En sortie de réinjecteur, quelle que soit la variante :

A la sortie du réinjecteur, c'est-à-dire de l'enceinte 2, les produits peuvent tomber dans un conteneur de type pallock garni d'un sac plastique imperméable aux gaz.

Le choix du gaz neutre est à déterminer en fonction des avantages et des inconvénients qu'ils ont pour les aliments concernés, et des obligations de maintenance par exemple :
- Acidification par le dioxyde de carbone ***versus*** densité et stabilité du dioxyde de carbone qui tombe au fond des sacs et n'en sort pas.
- Neutralité du diazote (nitrogène) ***versus*** échappement du diazote vers le haut du sac obligeant une réinjection régulière de gaz.

### Utilisation du système de dispositifs dans la configuration CONF 2 (non conforme à l'invention)

Dans la configuration CONF 2, qui sert au dégazage initial et à la pré-stérilisation de produits pâteux avec ou sans morceaux avant traitement thermique, telle qu'elle est proposée dans une forme préférée en FIG 3 :
- L'enceinte 1 seule est utilisée et modifiée de la manière suivante :
- Le sas à alvéoles d'entrée 4 FIG 1 est remplacé par une pompe d'alimentation de l'enceinte 2 FIG 3
- Le sas à alvéoles de sortie 7 FIG 1 est supprimé et remplacé par une trémie suivie d'une pompe d'alimentation 3 FIG 3 pour approvisionner le tube de traitement thermique (surface raclée ou ohmique)
- Les disques de la vis sans fin décrite en 11 FIG 1 ne sont pas munis de trous dans la configuration 2 (voir 4 FIG 3)

## Revendications

1. Système de désoxygénation, de débactérisation et de réfrigération ou de surgélation de produits (6) alimentaires en morceaux et lavés comportant :
- un dégazeur (1) par pompe à vide sous pression absolue inférieure à 30 mbar et pouvant atteindre 10 mbar, et un réinjecteur (2), sous pression atmosphérique ou légèrement supérieure, agencé de manière successive avec le dégazeur (1);
- le dégazeur (1) comportant
- un tube de transfert (3) positionné horizontalement de base demi-cylindrique possédant un sas d'entrée (4) étanche équipé d'un premier dispositif à alvéoles (5) permettant de faire entrer des quantités fixes de produit (6), et un sas de sortie (7) étanche anti-retour équipé d'un second dispositif à alvéoles (8), le sas d'entrée (4) étant situé à une extrémité du tube (3) ;
- une pompe à vide (13) raccordé à deux dômes (12) du tube ;
- un arbre rotatif motorisé (9) monté à l'intérieur du tube (3) et soutenant une vis sans fin (10) dont les extrémités latérales sont ajustées de manière à atteindre quasiment la surface intérieure de la base du tube (3) permettant de faire avancer les produits (6);
- le reinjecteur (2) comportant
- un autre tube de transfert (15) de base demi-cylindrique dont l'entrée se fait par le sas de sortie étanche (7) du dégazeur (1) et possédant un autre sas de sortie (18); le sas de sortie étanche (7) du dégazeur (1) étant situé à une extrémité de l'autre tube de transfert (15) ; l'autre sas de sortie (18,) par lequel les produits peuvent sortir par gravité, étant situé à l'autre extrémité du tube ,
- un dispositif (19) d'injection de vapeur saturée à proximité de l'entrée des produits (6) sortant dudit dégazeur (1) ;
- un autre arbre rotatif motorisé (16) monté à l'intérieur de l'autre tube (15) et soutenant une autre vis sans fin (17) dont les extrémités latérales sont ajustées de manière à atteindre quasiment la surface intérieure de la base de l'autre tube (15) permettant de faire avancer les produits (6);
- un bain de liquide d'imprégnation dans lequel les produits (6) peuvent chuter depuis le dégazeur (1), l'autre tube de transfert (15) étant incliné de sorte à ce que l'autre sas de sortie (18) se situe au-dessus du niveau du liquide.

2. Système selon la revendication 1, **caractérisé en ce que** ledit dégazeur (1) est équipé d'un mécanisme de contrôle du niveau du produit alimentaire le long de la vis sans fin (10), permettant de réguler le flux d'entrée des produits (6) dans ledit dégazeur (1).

3. Système selon la revendication 1 ou 2, **caractérisé en ce qu'**il comporte
- une source de liquide d'imprégnation comportant un conteneur dans lequel se trouve un liquide de type assaisonnement à base d'huile ou d'eau qui a été au préalable dégazé par ailleurs, situé en hauteur afin que l'écoulement du liquide se fasse naturellement par gravité, ou mis sous légère pression pour que, lors de la mise en contact de la source avec le réinjecteur (2), ledit liquide s'écoule dans le réinjecteur (2) pour former le bain dans lequel les produits (6) puissent tremper et s'imprégner aisément dudit liquide ;
- un mécanisme de mesure et de dosage du liquide d'imprégnation.

4. Système selon l'une quelconque des revendications précédentes **caractérisé en ce que** l'autre sas de sortie (18) comprend une trémie.

5. Procédé continu et successif de désoxygénation, de débactérisation et de réfrigération ou de surgélation de produits alimentaires en morceaux, le procédé étant mis en oeuvre par le système selon l'une quelconque des revendications précédentes, le procédé comportant des étapes de :
- réception des produits (6) dans le tube de transfert (3) du dégazeur (1) par le sas d'entrée (4) ;
- mise sous vide du dégazeur (1) par la pompe à vide (13) selon une pression absolue inférieure à 30 mbar et pouvant atteindre 10 mbar ;
- dégazage des produits (6) ;
- progression des produits (6) dans le dégazeur (1) par la vis sans fin (10) ;
- chute des produits (6) par le sas de sortie étanche (7) du dégazeur (1) dans l'autre tube de transfert (15) du réinjecteur (2) sous pression atmosphérique ou légèrement supérieure et dans le bain de liquide d'imprégnation;
- injection d'une atmosphère de vapeur saturée à proximité de l'entrée des produits (6) dans l'autre tube de transfert (15) du réinjecteur (2) et sortant dudit dégazeur (1) ;
- barbotage des produits (6) dans le bain de liquide d'imprégnation ;
- progression des produits (6) dans le réinjecteur (2) par l'autre vis sans fin (17) ;
- libération des produits (6) par l'autre sas de sortie (18).

6. Procédé selon la revendication précédente comprenant une étape de :
- régulation du flux d'entrée des produits (6) dans ledit dégazeur (1) par le mécanisme de contrôle du niveau du produit alimentaire le long de la vis sans fin (10).

7. Procédé selon la revendication 5 ou 6 comprenant des étapes de :
- écoulement du liquide d'imprégnation par gravité dans l'autre tube de transfert (15) du réinjecteur (2) ;
- mesure et de dosage du liquide d'imprégnation.

8. Procédé selon l'une quelconque des revendications 5 à 7 comprenant une étape de :
- libération des produits (6) par gravité par l'autre sas de sortie (18), les produits (6) étant dirigés par une trémie.

## Patentansprüche

1. Verfahren zum Desoxidieren, zum Debakterisieren und Kühlen oder Tiefkühlen von Nahrungsmittelprodukten (6) in Stücken und gewaschen, Folgendes beinhaltend:
- einen Entgaser (1) durch Vakuumpumpe unter einem absoluten Druck von weniger als 30 mbar, und der 10 mbar erreichen kann, und einen Wiedereinspritzer (2) unter atmosphärischem Druck oder etwas darüber, nacheinander mit dem Entgaser (1) angeordnet;
- wobei der Entgaser (1) Folgendes beinhaltet
- ein Transferrohr (3), das horizontal positioniert ist, mit halbzylindrischer Basis, eine dichte Eingangsschleuse (4) besitzt, die mit einer ersten Wabenvorrichtung (5) ausgerüstet ist, die es ermöglicht, festgesetzte Produktmengen (6) eintreten zu lassen, und eine Ausgangsschleuse (7) mit Ruckflussverhinderung, die mit einer zweiten Wabenvorrichtung (8) ausgerüstet ist, wobei sich die Eingangsschleuse (4) an einem Ende des Rohres (3) befindet;
- eine Vakuumpumpe (13), die an zwei Kuppeln (12) des Rohres angeschlossen ist;
- eine motorisierte Drehwelle (9), die im Inneren des Rohres (3) montiert ist, und eine Schnecke (10) trägt, deren seitliche Enden derart angepasst sind, um nahezu die Innenfläche der Basis des Rohres (3) zu erreichen, wodurch es ermöglicht wird, die Produkte (6) fördern zu lassen;
- wobei der Wiedereinspritzer (2) Folgendes beinhaltet
- ein anderes Transferrohr (15) mit halbzylindrischer Basis, dessen Eingang über die dichte Ausgangsschleuse (7) des Entgasers (1) erfolgt, und das eine andere Ausgangsschleuse (18) besitzt; wobei sich die dichte Ausgangsschleuse (7) des Entgasers (1) an einem Ende des anderen Transferrohres (15) befindet;
wobei sich die andere Ausgangsschleuse (18), durch die die Produkte durch Schwerkraft austreten können, am anderen Ende des Rohres befinden,
- eine Einspritzvorrichtung (19) für gesättigten Dampf in der Nähe des Eingangs der aus dem Entgaser (1) austretenden Produkte (6);
- eine andere motorisierte Drehwelle (16), die im Inneren des anderen Rohres (15) montiert ist und eine andere Schnecke (17) trägt, deren seitlichen Enden derart angepasst sind, um nahezu die Innenfläche der Basis des anderen Rohres (15) zu erreichen, wodurch es ermöglicht wird, die Produkte (6) fördern zu lassen;
- ein Bad mit Imprägnierungsflüssigkeit, in das die Produkte (6) aus dem Entgaser (1) fallen können, wobei das andere Transferrohr (15) derart geneigt ist, dass sich die andere Ausgangsschleuse (18) oberhalb des Niveaus der Flüssigkeit befindet.

2. System nach Anspruch 1, **dadurch gekennzeichnet, dass** der Entgaser (1) mit einem Kontrollmechanismus für das Niveau des Nahrungsmittelproduktes entlang der Schnecke (10) ausgerüstet ist, der es ermöglicht, den Eingangsfluss der Produkte (6) in den Entgaser (1) zu regeln.

3. System nach Anspruch 1 oder 2, **dadurch gekennzeichnet, dass** es Folgendes beinhaltet
- eine Imprägnierungsflüssigkeitsquelle, die einen Behälter beinhaltet, in dem sich eine Flüssigkeit vom Typ Dressing auf Basis von Öl oder Wasser befindet, das vorab anderswo entgast wurde, der sich in der Höhe befindet, damit die Strömung der Flüssigkeit natürlich durch Schwerkraft erfolgt, oder unter leichten Druck versetzt, damit die Flüssigkeit bei Kontaktaufnahme der Quelle mit dem Wiedereinspritzer (2) in den Wiedereinspritzer (2) strömt, um das Bad zu bilden, in dem die Produkte (6) einweichen und sich einfach mit der Flüssigkeit imprägnieren können;
- einen Mess- und Dosiermechanismus für die Imprägnierungsflüssigkeit.

4. System nach einem der vorstehenden Ansprüche, **dadurch gekennzeichnet, dass** die andere Ausgangsschleuse (18) einen Trichter umfasst.

5. Fortlaufendes und aufeinanderfolgendes Verfahren zum Desoxidieren, zum Debakterisieren und Kühlen oder Tiefkühlen von Nahrungsmittelprodukten in Stücken, wobei das Verfahren durch das System nach einem der vorstehenden Ansprüche umgesetzt wird, wobei das Verfahren die folgenden Schritte beinhaltet:
- Empfangen der Produkte (6) in dem Transferrohr (3) des Entgasers (1) durch die Eingangsschleuse (4);
- Vakuumbeaufschlagung des Entgasers (1) durch die Vakuumpumpe (13) entsprechend einem absoluten Wert von weniger als 30 mbar, und der 10 mbar erreichen kann;
- Entgasen der Produkte (6);
- Fördern der Produkte (6) in dem Entgaser (1) durch die Schnecke (10);
- Fallen der Produkte (6) durch die dichte Ausgangsschleuse (7) des Entgasers (1) in das andere Transferrohr (15) des Wiedereinspritzers (2) unter atmosphärischem Druck oder etwas darüber und in das Imprägnierungsflüssigkeitsbad;
- Einspritzen einer gesättigten Dampfatmosphäre in der Nähe des Eingangs der Produkte (6) in das andere Transferrohr (15) des Wiedereinspritzers (2) und aus dem Entgaser (1) austretend;
- Sprühbelüften der Produkte (6) in dem Imprägnierungsflüssigkeitsbad;
- Fördern der Produkte (6) in dem Wiedereinspritzer (2) durch die andere Schnecke (17);
- Freigeben der Produkte (6) durch die andere Ausgangsschleuse (18).

6. Verfahren nach dem vorstehenden Anspruch, einen Schritt umfassend zum:
- Regeln des Eingangsflusses der Produkte (6) in den Entgaser (1) durch den Kontrollmechanismus des Niveaus des Nahrungsmittelprodukts entlang der Schnecke (10).

7. Verfahren nach Anspruch 5 oder 6, die folgenden Schritte umfassend zum:
- Strömen der Imprägnierungsflüssigkeit durch Schwerkraft in das andere Transferrohr (15) des Wiedereinspritzers (2);
- Messen und Dosieren der Imprägnierungsflüssigkeit.

8. Verfahren nach einem der Ansprüche 5 bis 7, einen Schritt umfassend zum:
- Freigeben der Produkte (6) durch Schwerkraft durch die andere Ausgangsschleuse (18), wobei die Produkte (6) durch einen Trichter geleitet werden.

## Claims

1. System for deoxygenating, eliminating bacteria and cooling or freezing food products (6) that are washed and in pieces, including:
- a degasser (1) by vacuum pump under absolute pressure of less than 30 mbar and able to reach 10 mbar, and a reinjector (2), under atmospheric pressure or slightly above, arranged in sequence with the degasser (1);
- the degasser (1) including;
- a transfer tube (3) positioned horizontally with a semi-cylindrical base having an impervious inlet sluice gate (4) equipped with a first device (5) with cells enabling fixed amounts of the product (6) to enter, and a non-return impervious outlet sluice gate (7) equipped with a second device (8) with cells, the inlet sluice gate (4) being located at one end of the tube (3);
- a vacuum pump (13) connected to two domes of the tube (12);
- a motorised rotational shaft (9) mounted on the inside of the tube (3) and supporting a worm screw (10), the lateral ends of which are adjusted so as to virtually obtain the inner surface of the tube base (3) enabling the products (6) to advance;
- the reinjector (2) comprising:
- another transfer tube (15) with a semi-cylindrical base, the inlet of which is formed by the impervious outlet sluice gate (7) of the degasser (1) and having another outlet sluice gate (18); the impervious outlet sluice gate (7) of the degasser (1) being located at one end of the other transfer tube (15); the outer outlet sluice gate (18), through which the products can leave via gravity, being located at the other end of the tube,
- a device (19) for injecting saturated vapour close to the inlet of products (6) leaving said degasser (1);
- another motorised rotational shaft (16) mounted on the inside of the other tube (15) and supporting another worm screw (17), the lateral ends of which are adjusted so as to virtually obtain the inner surface of the base of the other tube (15), which enables the products (6) to advance;
- a bath of impregnation liquid into which the products (6) can drop from the degasser (1), the other transfer tube (15) being inclined such that the other outlet sluice gate (18) is located above the level of the liquid.

2. System according to claim 1, **characterised in that** said degasser (1) is equipped with a mechanism for controlling the level of the food product along the worm screw (10), enabling the inlet flow of products (6) into said degasser (1) to be regulated.

3. System according to claim 1 or 2, **characterised in that** it includes:
- a source of impregnation liquid including a container in which there is a seasoning type liquid with an oil or water base, which has been previously degassed, located high up so that the flow of liquid is achieved naturally by gravity, or placed under slight pressure so that during the contact of the source with the reinjector (2), said liquid flows into the reinjector (2) to form the bath in which the products (6) can be soaked and impregnated easily by said liquid;
- a mechanism for measuring and dosing the impregnation liquid.

4. System according to any of the preceding claims, **characterised in that** the other outlet sluice gate (18) comprises a hopper.

5. Continuous and successive process of deoxygenation, removing bacteria and cooling or freezing of food products that are in pieces, the method being implemented by the system according to any of the preceding claims, the method comprising the steps of:
- receiving products (6) in the transfer tube (3) of the degasser (1) via the inlet sluice gate (4);
- applying vacuum to the degasser (1) by the vacuum pump (13) at an absolute pressure lower than 30 mbar and able to reach 10 mbar;
- degassing the products (6);
- progressing the products (6) in the degasser (1) via the worm screw (10);
- dropping the products (6) via the impervious outlet sluice gate (7) of the degasser (1) into the other transfer tube (15) of the reinjector (2) under atmospheric pressure or slightly above and into the bath of impregnation liquid;
- injecting a saturated vapour atmosphere close to the inlet of products (6) into the other transfer tube (15) of the reinjector (2) and leaving said degasser (1);
- immersing products (6) in the bath of impregnation liquid;
- progressing the products (6) in the reinjector (2) via the other worm screw (17);
- discharging the products (6) through the other outlet sluice gate (18).

6. Method according to the preceding claim comprising a step of:
- regulating the inlet flow of products (6) into said degasser (1) by the mechanism for controlling the level of the food product along the worm screw (10).

7. Method according to claim 5 or 6 comprising the steps of:
- flowing impregnation liquid by gravity into the other transfer tube (15) of the reinjector (2);
- measuring and dosing the impregnation liquid.

8. Method according to any of claims 5 to 7 comprising a step of:
- discharging products (6) by gravity via the other outlet sluice gate (18), the products (6) being directed by a hopper.
